# EUROPEAN PATENT SPECIFICATION

(11) **EP 2 437 202 B1**
(45) Date of publication and mention of the grant of the patent: **21.11.2018**
(21) Application number: 11006721.2
(22) Date of filing: 17.08.2011
(51) Int. Cl.: G06K 15/16, G06K 15/00, B41J 3/60

(54) **PRINT CONTROL APPARATUS AND METHOD**
DRUCKSTEUERVORRICHTUNG UND -VERFAHREN
APPAREIL ET PROCÉDÉ DE CONTRÔLE D'IMPRESSION

(30) Priority: 29.09.2010 JP 2010219486
(43) Date of publication of application: 04.04.2012
(73) Proprietor: Canon Kabushiki Kaisha, Tokyo (JP)
(72) Inventor: Noguchi, Takayoshi, Tokyo (JP); Shishido, Kazunari, Tokyo (JP); Mikami, Ruriko, Tokyo (JP)
(74) Representative: WESER & Kollegen

(56) References cited:
- EP-A1- 0 787 596
- US-A- 4 935 786
- US-A1- 2008 225 330

## Description

### BACKGROUND OF THE INVENTION

### Field of the Invention

The present invention relates to a print control apparatus and a method for performing printing using a continuous sheet.

### Description of the Related Art

In the related art, there is a printing apparatus configured to print images on both sides of a continuous sheet such as a roll paper through operations of performing printing on one side of a continuous sheet fed into a printing unit, then cutting the continuous sheet and winding the cut sheet temporarily, feeding the continuous sheet again into the printing unit, and performing printing on an opposite side (see Japanese Patent Laid-Open No.11-249346). The printing apparatus as described above is configured to perform printing on a plurality of pages continuously on one side and, when printing on all the pages on the one side is finished, perform printing on the opposite side in order to achieve efficient printing.

When performing the printing in such a procedure, after having finished the printing on all the pages on the one side, the printing on the opposite side is performed, and then the sheet is cut into pages and discharged to the discharge destination. At this time, when a new sheet cannot be discharged due to the reason such that other sheets are already discharged in the discharge destination for example, the printing on the opposite side cannot be completed, which results in clogging of the printing process. Consequently, disadvantages such that subsequent printing process cannot be continued, or it is obliged to stop the clogged printing process and discard a sheet in the course of being printed may be resulted.
Moreover, US Patent Laid-Open No. 2008/0225330 relates to a printer including a data obtaining unit which obtains print data for sheets less than the maximum number of sheets dischargeable to a discharge tray including first print data of odd pages and second print data of even pages. After printing the first print data on one side of sheets fed from a feed tray and discharging the sheets onto the discharge tray, the second print data is printed on the other side of the sheets manually returned from the discharge tray to the feed tray.

### SUMMARY OF THE INVENTION

The present invention in its first aspect provides a print control apparatus as specified in claims 1 to 7.

The present invention in its second aspect provides a print controlling method as specified in claim 8 and a corresponding program as specified in claim 9. Further features of the present invention will become apparent from the following description of exemplary embodiments with reference to the attached drawings.

### BRIEF DESCRIPTION OF THE DRAWINGS

Fig. 1 is a drawing showing a configuration of an image forming apparatus as an example of an embodiment of the invention.
Fig. 2 is a block diagram showing a configuration relating to control of the image forming apparatus shown in Fig. 1.
Figs. 3 and 4 are flowcharts showing a flow of processes according to the embodiment.

### DESCRIPTION OF THE EMBODIMENTS

Referring now to the drawings, an example for implementing the invention will be described. The relative arrangement of respective components of an apparatus and the shape of the apparatus used in this embodiment are examples only, and the invention is not limited thereto.

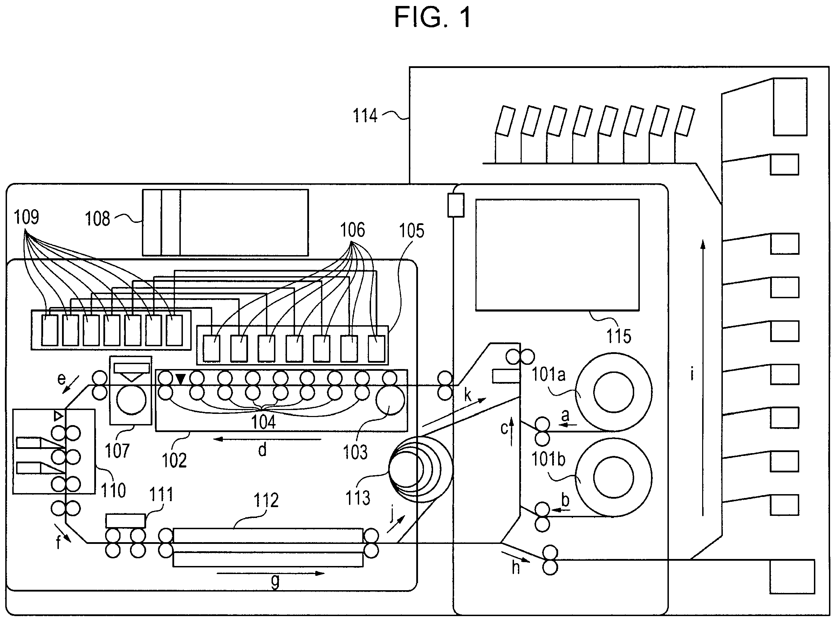

Fig. 1 is a drawing showing a schematic configuration of an image forming apparatus as an example of a print control apparatus in the embodiment. The image forming apparatus in Fig. 1 has only a printing function for printing data received from an external apparatus. However, the invention is not limited thereto, and an apparatus which also has a reading apparatus configured to read an image on a document so as to function as a copying machine or a multifunctional peripheral having other functions may also be applicable.

In the example, a roll sheet is used as recording material (recording medium or recording sheet) which is subject to the printing process. The roll sheet is an example of a continuous sheet. However, the continuous sheet may be of a type other than the roll type. Cutting of the continuous sheet may be performed automatically by the image forming apparatus, or may be performed on the basis of an instruction given manually by users. The material of the recording material is not limited to paper, but may be various materials which allow printing process to be applied thereon. The image forming apparatuses may be an image forming apparatus which is capable of printing not only on a continuous sheet, but also on cut sheets cut in advance to predetermined sizes.

A printing method is not limited to printing of images on the basis of an inkjet system using image printing liquid ink described later. A recording agent to be applied on the recording material may be a solid ink, or various systems such as an electrophotographic system using toner, a dye-sublimation system, a thermal transfer system, and a dot-impact system are applicable. The recording is not limited to color recording using the recording agents of a plurality of colors, and monochrome recording using only black (including gray) is also applicable. The printing is not limited to the printing of visible images and a variety of types of printing such as printing of invisible images or images which are hardly visible, patterns other than general images, for example, wiring patterns, printing of physical patterns for manufacturing parts, and printing of DNA base sequences are also applicable. In other words, the invention is applicable to a variety of types of recording apparatuses as long as the recording agent can be applied on the recording material. When the operation of the printing process in the image forming apparatus is controlled on the basis of the instructions from the external apparatus connected to the image forming apparatus shown in Fig. 1, the external apparatus corresponds to a print control apparatus.

Fig. 1 is a cross-sectional view schematically showing a general configuration of the image forming apparatus in which the roll sheet (a continuous sheet having a length longer than a unit of printing (1 page) in the direction of conveyance) is used as the recording material. The image forming apparatus includes following components 101 to 115, which are arranged in a housing. However, these components may be accommodated in a plurality of housings.

A control unit 108 includes a controller (including CPU or MPU), output unit for user interface information (generator for display information or sound information), and a control unit having various I/O interfaces integrated therein, and is responsible for various kinds of control in the entire image forming apparatus.

As a unit that holds and supplies the roll sheet, two cassettes, namely, an upper sheet cassette 101a and a lower sheet cassette 101b are provided. A user mounts the roll sheet (hereinafter, referred to as "sheet") into a magazine, and then mounts the magazine in the main body of the image forming apparatus. The sheet drawn from the upper sheet cassette 101a is conveyed in the direction indicated by an arrow "a" in the drawing, and the sheet drawn from the lower sheet cassette 101b is conveyed in the direction indicated by an arrow "b" in the drawing, respectively. The sheets from the both cassettes proceed in the direction indicated by an arrow "c" in the drawing and reach a conveying unit 102. The conveying unit 102 conveys the sheet in the direction indicated by an arrow "d" (horizontal direction) through a plurality of rotating rollers 104 during the printing process. When switching the sheet cassette from one to the other, the sheet which is already drawn out is rewound into the cassette, which is a source of sheet supply, and a new sheet is supplied from the cassette in which the new sheet to be supplied is set.

A head unit 105 is arranged above the conveying unit 102 so as to oppose thereto. Printheads 106 independent for a plurality of colors (seven colors in this embodiment) are held in the head unit 105 along the direction of conveyance of the sheet. In this example, the printheads including seven printheads corresponding to seven colors, namely, C (cyan), M (magenta), Y (yellow), LC (light cyan), LM (light magenta), G (gray), and K (black) are provided. It is also possible to use colors other than these seven colors, and it is not necessary to use all of these colors.

The image forming apparatus causes the printheads 106 to discharge ink synchronously with the conveyance of the sheet by the conveying unit 102 and forms an image on the sheet. The printheads 106 are arranged at positions where destinations of ink are not overlapped with the rotating rollers 104. The image may be formed by applying the ink to an intermediate transfer member, and then applying the ink to the sheet instead of being formed by discharging ink directly on the sheet.

A unit for printing in the present embodiment includes the conveying unit 102, the head unit 105, and the printheads 106.

Ink tanks 109 accommodate ink of respective colors independently. Ink is supplied from the ink tanks 109 to sub tanks provided corresponding to the respective colors, via tubes, and the ink is supplied from the sub tanks to the printheads 106 via the tubes.

The printheads 106 includes line heads of respective colors (seven colors in this embodiment) arranged along the direction of conveyance during printing indicated by an arrow "d". The line heads of the respective colors may be formed of a single nozzle chip without joint lines, or the divided nozzle chips may be arranged regularly in line or in a zigzag pattern. The printhead employed in this embodiment is so-called a full multi head having nozzles arranged within a range which covers the width of a printing area on a sheet having a maximum size available in this apparatus. Examples of an inkjet system, which is a system to cause nozzles to discharge ink, include a system using a heat-generating element, a system using a piezoelectric element, a system using an electrostatic element, and a system using MEMS element. The ink is discharged from the nozzles of the respective heads on the basis of the print data. However, the timing of discharge is determined on the basis of an output signal from a conveyance encoder 103.

After having formed an image on the sheet, the sheet is conveyed from the conveying unit 102 to a scanner unit 107. The scanner unit 107 optically reads a printing image or a specific pattern on the sheet to confirm whether there are any problems in the printing image or to confirm the state of the apparatus including an ink discharging state. As the method of confirming the printing image, a method of confirming the ink discharging state by reading a pattern for confirming the state of the heads, or a method of confirming whether the printing result is acceptable or not by comparing with an original image are applicable. The method of confirming may be selected as needed from various types of methods.

The sheet is conveyed from the vicinity of the scanner unit 107 in the direction indicated by an arrow "e" and is introduced into a cutter unit 110. The cutter unit 110 cuts the sheet into a predetermined length of the unit of the printing. The predetermined length of the unit of the printing is different according to the image size to be printed. For example, the length of an L-size picture in the direction of conveyance is 135 mm, and the length of an A4-size sheet in the direction of conveyance is 297 mm. The cutter unit 110 cuts the sheet on a per page basis in the case of the simplex printing. However, there may be a case where the sheet is not cut by the page unit depending on the content of the printing job. In the case of the duplex printing, the cutter unit 110 does not cut the sheet by the page unit when printing on the first side (the side to be printed first, the front side, for example) and allows printing of the images to be continued until it reaches a predetermined length, and cuts the sheet on the per page basis when printing on the second side (the side to be printed later, the back side, for example). The cutter unit 110 is not limited to a configuration which cuts the sheets by image in the simplex printing or while printing on the back side in the duplex printing. It is also possible to configure the cutter unit 110 not to cut the sheet until the sheet is conveyed by a predetermined length, and to cut the sheet when it is conveyed by the predetermined length, to use another cutting device for cutting these sheets manually by an image on one page. As the widthwise direction of the sheet, another cutting device is used when cutting is needed.

The sheet conveyed from the cutter unit 110 is conveyed in the unit in the direction indicated by an arrow "f" in the drawing to a back side printing unit 111. The back side printing unit 111 is a unit used for printing predetermined information on the back side of the sheet when printing the image only on one side of the sheet. The information to be printed on the back side of the sheet includes information such as characters, signs, or codes corresponding to each of the printing images (for example, the numbers for order management). When the printheads 106 print images for the printing job of the duplex printing, the back side printing unit 111 prints the information as described above in an area other than the area where the printheads 106 print the images. Examples of a system which can be employed in the back side printing unit 111 include impressing of a recording agent, thermal transferring, and inkjet system.

The sheet passed through the back side printing unit 111 is subsequently conveyed to a drying unit 112. The drying unit 112 is a unit configured to heat the sheet passing through the unit in the direction indicated by an arrow "g" in the drawing with hot air (heated gas (air)) for drying the sheet applied with ink in a short time. A variety of drying methods such as drying with cold air, heating with a heater, air-drying only by waiting, and irradiation of electromagnetic wave such as UV light may be employed instead of using the hot air. The sheets cut into a length of the unit of the printing passes through the drying unit 112 one by one, and is conveyed in the direction indicated by an arrow "h" in the drawing to a sorting unit 114.

The sorting unit 114 includes a plurality of trays (18 trays in this embodiment) and distinguishes the trays as the discharge destinations of the sheets according to the length of the unit of printing or the like. Tray numbers are assigned to the respective trays. The sorting unit 114 discharges the sheets passing through the unit in the direction indicated by an arrow "i" in the drawing into trays corresponding to the tray numbers set on a print image basis while confirming if the vacancy of the tray or whether or not the tray is full of the sheets with sensors provided on the respective trays. The trays as the discharge destinations of the cut sheets are may be specified specifically by the source which issues printing jobs (host apparatus), or may be specified arbitrary by the image forming apparatus on the basis of the vacancy. The predetermined number of sheets is allowed to be discharged to one tray. In the case of the printing job exceeding the predetermined number of sheets, the sheets are discharged into a plurality of trays in sequence. The number, size, and type of the sheets which can be discharged into one tray vary depending on the size (type) of the tray. In Fig. 1, a group of trays arranged in the vertical direction (in the up-down direction) (hereinafter, referred to as "large tray") allows discharge of both large-size sheets (sizes larger than L-size, such as A4 size) and small-size (L-size) sheets. A group of trays arranged in the lateral direction (left and right direction) (hereinafter, referred to as "small tray" allows discharge of a small size (L size) sheets, but not the large-size sheets. The large tray accepts a larger number of sheets than the small tray.

The states such as "sheet being discharged" or "discharge of sheet completed" are made recognizable by the users using a display unit (LED, for example). For example, a plurality of LEDs which emit light in colors different from each other are provided, so that the user recognizes a variety of states of the respective trays from the color of the lit-up LED, the lighting state, or the blinking state. A priority may be assigned to the plurality of trays respectively, so that the image forming apparatus allocates vacant trays (having no sheets present therein) as the discharge destinations in sequence according to the assigned priority when performing the printing job. In default setting, the large trays are arranged vertically in order of decreasing priority and the small trays are arranged from the left to the right in order of decreasing priority. A higher priority is given to the small trays than to the large trays. The priority may be set according to the easiness of approach to take out the sheet for the user. The priority may be configured to be changeable through the user's operation.

A sheet winding unit 113 winds the sheet printed on the front side thereof and not cut into pages. In the duplex printing, the sheet having been subjected to the image formation on the front side first is not cut into pages by the cutter unit 110, but is cut after having completed the printing on the continuous front side. The sheet having printed on the front side thereof passes through the unit in the direction indicated by an arrow "j" in the drawing and is wound by the sheet winding unit 113. Then, the sheet after having formed with the image on the front side for a series of pages and wound by the sheet winding unit 113 is conveyed again in the direction indicated by an arrow "k" in the drawing in the unit with a side opposite from the front side which is already printed turned to allow printing thereon that is, with the surface to be opposed to the printheads 106 inverted. With the conveyance as described above, the images are printed on the back side opposite from the front side. In the case of the normal simplex printing, the sheet having printed the images thereon is not wound by the sheet winding unit 113, and is conveyed to the sorting unit 114.

In this manner, in the duplex printing, the sheet is wound using the sheet winding unit 113 and then is inverted for printing on the back side. Therefore, the orientation of the side of the sheet when being discharged into the sorting unit 114 in the case of the simplex printing is different from that in the case of the duplex printing. In other words, in the simplex printing, the inversion of the sheet using the sheet winding unit 113 is not performed, and hence the sheet printed with an image for a front page is discharged with the image of the front page faced down. In the case of a job in which one printing job involves a plurality of pages, the sheets are discharged into the tray initially from the sheet of the front page and then the sheets of the following pages are stacked in sequence. Such discharging method is referred to as "face-down discharge". In contrast, in the duplex printing, the inversion of the sheet using the sheet winding unit 113 is performed, and hence the sheet printed with an image for a front page is discharged with the image of the front page faced up. In the case of a job in which one printing job involves output of the plurality of sheets, the sheets are discharged into the tray from the sheet of the last page and, from then onward, the sheets are discharged in sequence one on top of another in the descending order. Finally, the sheet of the page having the image for the front page is discharged. Such discharging method is referred to as "face-up discharge". It is also possible to change the printing sequence of the first side (descending order or ascending order) between the simplex printing and the duplex printing in order to discharge the sheets on the same side both in the simplex printing and the duplex printing (unified to the face-up discharge or to the face-down discharge).

An operation unit 115 is a unit used by the user for performing various operations or used for notifying various items of information to the user. For example, the operation unit 115 is capable of confirming the states of printing per order such as "in which tray the sheets printed with an image specified by the user are stacked", or "whether the image is being printed or already printed". In addition, the operation unit 115 can be operated and confirmed by the user for confirming the remaining amount of ink, the remaining amount of sheet, or a variety of states of the apparatus or for issuing instructions of execution of maintenance of the apparatus such as head cleaning.

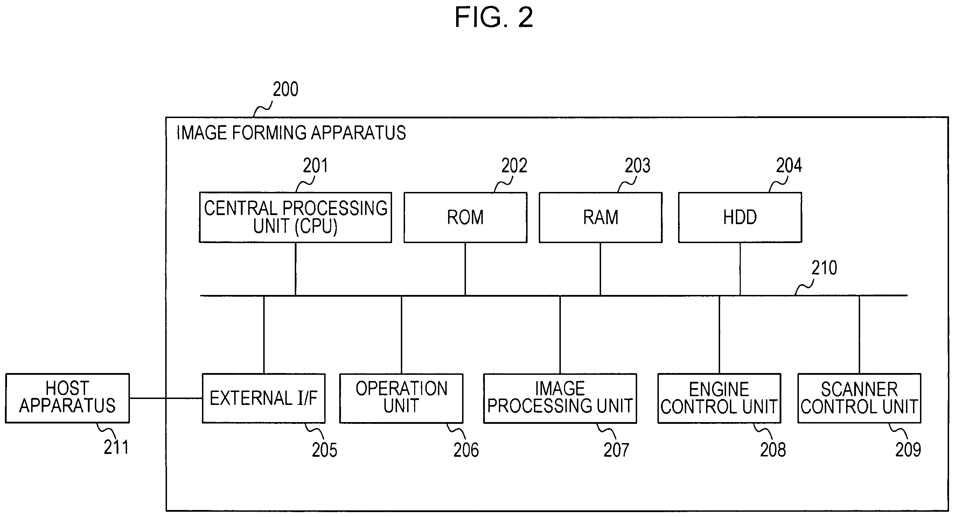

Fig. 2 is a block diagram for explaining the configuration relating to the control in the image forming apparatus shown in Fig. 1. An image forming apparatus 200 is an image forming apparatus shown in Fig. 1. However, the configuration shown below is an example only, and various changes are possible.

The control unit 108 mainly includes a CPU 201, a ROM 202, a RAM 203, an image processing unit 207, an engine control unit 208, and a scanner control unit 209. Then, a HDD 204, an operation unit 206, and an external I/F 205 are connected to the control unit 108 via a system bus 210.

The CPU 201 is a central processing unit in the form of a microprocessor (microcomputer), and is included in the control unit 108 in Fig. 1. The CPU 201 controls the operation of the entire image forming apparatus 200 by executing a program or by activating hardware. The ROM 202 stores fixed data required for programs executed by the CPU 201 and respective operations of the image forming apparatus 200. The RAM 203 is used as a work area for the CPU 201, is used as a temporary storage area for various received data, and is used for storing various setting data. The HDD 204 is capable of storing and retrieving the programs executed by the CPU 201, the print data, and set information required for various actions of the image forming apparatus 200 in and from a hard disk integrated therein. Other bulk storages may be used instead of the HDD 204.

The operation unit 206 includes a hard key or a touch panel used by the user for performing various operations, or a display unit for presenting (notifying) various information to the user, and corresponds to the operation unit 115 in Fig. 1. Presentation of the information to the user is also achieved by outputting a sound (buzzer or voice) on the basis of the sound data from a sound generator.

The image processing unit 207 is configured to develop (convert) the print data (for example, data expressed by a page description language) treated in the image forming apparatus 200 into an image data (bitmap image) or perform image processing. The image processing unit 207 converts a color space of input image data included in the print data (for example, YCbCr) into a standard RGB color space (for example, sRGB). The image processing unit 207 also performs various types of image processing such as resolution conversion to effective (printable by the image forming apparatus 200) number of pixels, image analysis, image correction, and so on as needed for image data. The image data after having subjected to the image processing as described above is stored in the RAM 203 or in the HDD 204.

The engine control unit 208 performs control of the process of printing the image on the basis of the print data on the sheet according to the control commands received from the CPU 201 or the like. The engine control unit 208 also performs issuance of the instruction of ink discharge to the printheads 106 of the respective colors, setting of the timing of discharge for adjusting the dot position (positions of ink dots) on the recording medium, and adjustment on the basis of the acquisition of the driving state of the heads. The engine control unit 208 controls the driving of the printheads on the basis of the print data, and causes the printheads to discharge ink to form an image on the sheet. The engine control unit 208 further performs issuance of the drive instruction of a drawing roller configured to draw the sheet from the cassette, issuance of the drive instruction of a conveying roller configured to convey the drawn sheet, and control of the conveying roller such as acquiring the state of rotation of the conveying roller, and conveys the sheet at adequate speed and path or stops the sheet.

The scanner control unit 209 performs control of an image sensor according to a control command received from the CPU 201 or the like, reads the image on the sheet, acquires analog luminance data of red (R), green (G), and blue (B), and convert the acquired analogue luminance data into a digital data. Examples of the image sensor which can be employed here include a CCD image sensor and CMOS image sensor. The image sensor may be a linear image sensor or an area image sensor. The scanner control unit 209 performs issuance of the drive instruction of the image sensor and acquisition of the state of the image sensor on the basis of the driving, and analyses the luminance data acquired from the image sensor to detect failure of discharge of ink from the printheads 106 and the cutting position of the sheet. The sheet, which is determined that the image is correctly printed thereon by the scanner control unit 209 is subjected to a drying process to dry the ink on the sheet, and is discharged on the tray of the specified sorting unit.

A host apparatus 211 is an apparatus corresponding to the external apparatus described above and being connected to the outside of the image forming apparatus 200 to serve as a source of supply of the image data for causing the image forming apparatus 200 to perform the printing, and issues orders of various printing jobs.

The host apparatus 211 may be achieved by a multipurpose personal computer (PC) or may be data supply apparatuses of other types. Examples of the data supply apparatus of other types include an image capture apparatus configured to generate image data by capturing the image. Examples of the image capture apparatus include a reader (scanner) configured to generate image data by reading the image on the original or a film scanner configured to generate the image data by reading a negative film or a positive film. Examples of image capture apparatus also include a digital camera configured to shoot still images to create digital image data and a digital video camera configured to shoot movies to create movie data. It is also possible to install a photo storage on a network, or provide the image forming apparatus 200 with a socket for allowing insertion of a detachable portable memory to read out an image file stored in the photo storage or the portable memory and generate the image data for printing. A variety of data supply apparatuses such as providing a terminal specific for the image forming apparatus may also be employed instead of the multipurpose PC. The data supply apparatus may be used as a component of the image forming apparatus, or may be used as a separate apparatus connected to the outside of the image forming apparatus. In the case where the PC is employed as the host apparatus 211, an OS (operating system), application software used for generating image data, and a printer driver for the image forming apparatus 200 are installed in a storage device of the PC. The printer driver is configured to control the image forming apparatus 200, and generate a print data by converting the image data supplied from application software into a format which can be supported by the image forming apparatus 200. It is also possible to perform the conversion from print data to image data on the side of the host apparatus 211 and then to supply the image data to the image forming apparatus 200. All the processes do not necessarily have to be realized using the software and may be realized partly or entirely using hardware such as ASIC (Application Specific Integrated Circuit). The image data supplied from the host apparatus 211 or other commands, and even the status signals are transmittable with respect to the image forming apparatus 200 via the external I/F 205. The external I/F 205 may either be a local I/F or a network I/F. The external I/F 205 may be connected via a wired line or via radio.

Respective configurations described above in the image forming apparatus 200 are connected via the system bus 210, and are communicatable with respect to each other.

In the example described above, the single CPU 201 is configured to control all the components in the image forming apparatus 200 shown in Fig. 2. However, other configuration may also be applicable. In other words, a configuration in which some of the respective functional blocks are provided with their own CPUs, and are controlled individually by their CPUs is also applicable. The respective functional blocks may employ a variety of forms such as dividing into individual processing units or control units depending on the roles other than those in the configuration shown in Fig. 2, or combining several functional blocks. A DMAC (Direct Memory Access Controller) may be employed for reading data from the memory.

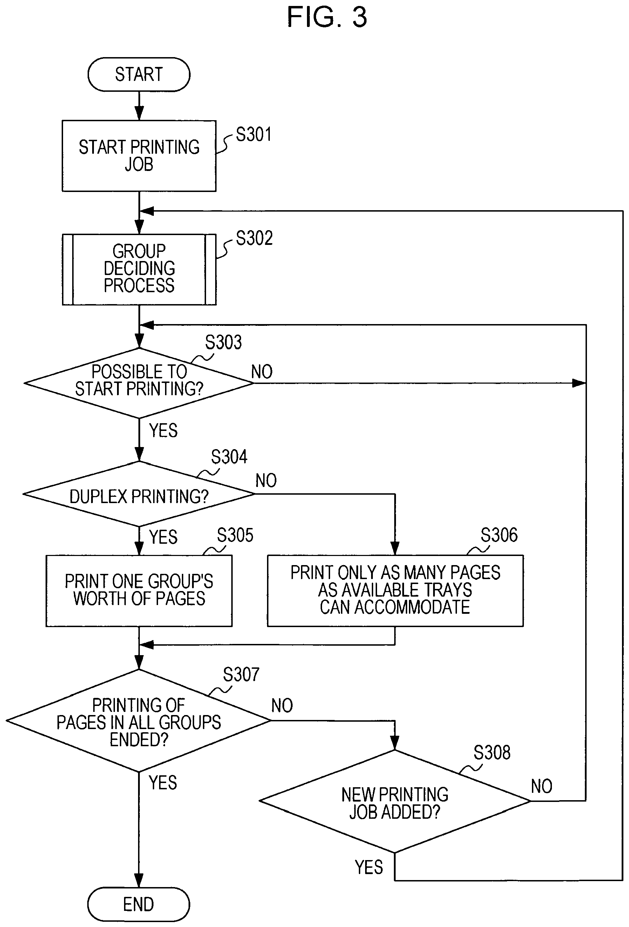

A flow of processes for executing the printing job by the image forming apparatus 200 in the configuration as described above will be described. Fig. 3 is a flowchart showing a flow of the processes when the image forming apparatus 200 accepts the printing job and executes the printing job. This flowchart shows a flow of the processes that the CPU 201 performs by loading a control program stored in the ROM 202 or the HDD 204 into the RAM 203 and executing the loaded control program. It is assumed that the sizes of the sheets (roll widths) and types of the sheets (material such as normal paper, glossy paper, film, etc.) set in the sheet cassettes 101a and 101b are already registered in the RAM 203 through the operation by the user via the operation unit 206.

In S301, if the printing job is accepted via the external I/F 205, the process of this printing job is started. The received printing job is stored once in the HDD 204. Here, provisional ordering of printing is determined for the respective pages. In other words, in the case of the face-down discharge, it is determined to perform printing of even pages on the first side in a descending order and of odd pages on the second side in an ascending order, respectively, if it is the duplex printing. It is determined to print in the ascending order, if it is the simplex printing. Even if it is the duplex printing, in the case of bookbinding printing, it is determined to follow the bookbinding layout, that is, to discharge the front page first with the face-down and follow the layout otherwise. If the entered printing job is the printing of only one page, the provisional ordering is not performed.

Then, the procedure goes to S302, where the group determining process is performed. The term "group" means a unit of pages to be printed continuously, and the pages to be sorted in the same group are adjacent pages having the same print setting. Therefore, pages belonging to different printing jobs may be included into the same group. In the case of the duplex printing, a pair of pages arranged on the first side and the second side and a pair of pages arranged adjacent thereto respectively having the same print setting belong to the same group. However, when sorting pages for the duplex printing and pages for the simplex printing in the same group, the pages to be printed on the first side in the duplex printing and the pages to be printed in the simplex printing job need to have the same print setting (the sheet to be used and the image quality mode), and the printing processes by themselves are performed according to the procedure in the duplex printing. For pages sorted in the same group are not subjected to a process of drawing back the sheets to the sheet cassettes between the pages (but is performed if the pages belong to different groups). If the pages sorted in the same group are for the duplex printing, printing on the first side is performed continuously (including those belonging to different printing jobs), and then printing on the second side is performed. Accordingly, the number of times of inversion of the sheet is reduced, and the efficient printing process is realized. When printing continuously on the same side of the sheet, a process to set a margin between pages is also included.

The process in S301 is performed in sequence also while the process in S302 is performed, and the provisional ordering of printing in the printing job and the accumulation in the HDD 204 are performed every time when a new printing job is input.

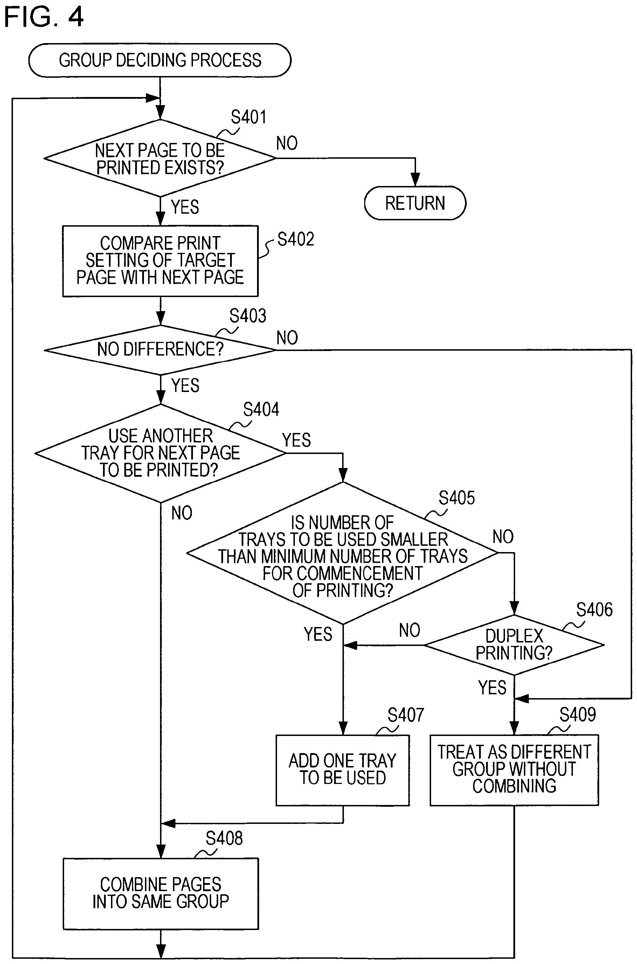

Fig. 4 is a flowchart showing detailed group deciding process in S302. When performing the process shown in Fig. 4, the processes are performed in sequence from a page to be printed firstly in the printing sequence for the first side determined provisionally in S301.

In S401, whether there is a page to be printed next to the target page is determined. Here, the expression "the next page to be printed" means the page to be arranged next on the same side as the sheet according to the provisional ordering in S301. If the target page to be printed is a page to be arranged at a tail end on the same side as the sheet, and if the next printing job is already input, the expression "the next page to be printed" means a page to be arranged first of the sheet in this printing job.

In S402, the print settings for the target page and for the next page are compared. The comparison here is a comparison for determining whether further printing can be performed continuously on the same sheet or not. Therefore, the print setting to be compared includes setting relating to the available sheet (sheet size and sheet type). When the image quality modes are different, preparatory discharge of the ink once may be required and, in such a case, the continuous printing may not be performed. Therefore, the image quality modes may also be compared. If the target page is for the duplex printing, the print settings for the page arranged on the opposite side and for the page arranged on the opposite side of a page next to the target page are also compared. If one of the target page or the next page is the page for the duplex printing, the comparison is made only the side where the pages to be printed exist. In any cases, here, the comparison for determining whether the plurality of pages are printable continuously on the same side of the same sheet is performed.

Then, in S403, whether there is no difference (the plurality of pages are printable continuously on the same side of the same sheet) as a result of the comparison in S402 is determined, and if yes, the procedure goes to S404. If it is determined that there is a difference, the procedure goes to S409.

In S404, it is determined whether the next page to be printed needs to be discharged into a tray different from the target page. The cases of discharging into the different tray includes a case where the target page and the next page to be printed belong to different printing jobs and a case where the number of pages in the tray reaches an allowable number of pages of the tray with the target page and hence the discharge destination of the next page to be printed is switched to another tray. If the result of determination is affirmative, the procedure goes to S405, and if negative, the procedure goes to S408.

In S405, whether the number of trays which are decided to be used previously is smaller than the minimum number of trays for a commencement of printing is determined. The number of trays which are decided to be used previously corresponding to the required number of trays stored in the RAM 203, and is renewed while being added in sequence in S407 as described later. The minimum number of trays for the commencement of printing corresponds to the number of currently available trays from among all the trays available for the printing process. The CPU 201 regularly observes the respective trays in the sorting unit 114 whether they are vacant (no sheet remained therein), or whether they are in a error state, and hence is capable of determining whether the tray to be used in the printing process performed from now on is currently available. It is not necessarily required to bring the minimum number of trays for the commencement of printing to match the number of all the available trays, and may be somewhat more or less than the number of available trays. It is because the likelihood of removal by the user soon is expected even though the tray is not currently vacant, or for keeping some trays vacant always for an urging printing job. In the former case, a sound to urge the user to remove the sheet may be produced. This may be configured to allow the user to set arbitrarily. If the result of determination is affirmative in S405, the procedure goes to S407, and if negative, the procedure goes to S406.

In S406, whether the target page to be printed and the next page to be printed (if they belong to the same group) are to be subjected to the duplex printing is determined. If the result of determination is negative, the procedure goes to S407, and if affirmative, the procedure goes to S409.

In S407, the required number of trays stored in the RAM 203 is incremented by one. At the time point when the one printing job is accepted, at least one tray is used. Therefore, the required number of trays is set to one when the printing job is started, and subsequently is incremented by one in sequence. Since the number of available trays is different depending on the printing job, the numbers of trays may be stored individually according to the types of the trays.

In S408, it is decided to combine the target page to be printed and the next page to be printed, and sort these pages to the same group. The term "combine" here does not mean simply to combine these two pages, but includes the process to provide a margin between the pages, and it does not mean to combine two pages into one page, but cutting between pages is performed in the subsequent cutting process. In S409, it is decided not to combine the target page to be printed and the next page to be printed, and sort these pages to different groups. Then, the processes as described above are repeated until the negative determination is given in S401. However, it is also possible to return to the process in Fig. 3 so that the printing process for the first group can be performed when the second group is decided in S409 instead of repeating the process until there is no more next page to be printed. In this case as well, the procedure for the subsequent page to be printed is performed in parallel according to the flow in Fig. 4.

Referring now back to Fig. 3, if at least one group is decided through the group deciding process as described above, whether it is possible to start printing is determined in S303. In this step, the number of available trays is determined. In the case of the duplex printing, whether there is (are) available tray(s) by the number which allows printing of one group's worth of pages is determined. In the case of the simplex printing, whether there is at least one available tray is determined. The purpose of performing such determination here is to reflect a change of the number of available trays from the timing of determination in S405, if any, in the subsequent determination. If the result of determination is affirmative, the procedure goes to S304.

In S304, whether or not the group of pages to be printed is for the duplex printing is determined. If it is the duplex printing, the procedure goes to S305, where printing of one group's worth of pages is performed. If the face-down discharge is performed at this time, the pages to be arranged on the first side are printed in the descending order, and the pages to be arranged on the second side are printed in the ascending order. After the printing on the second side is performed, the sheet is cut into pages (in the case of the bookbinding printing, the sheet may not be cut into pages), and is discharged into the trays. At this time, even when the plurality of printing jobs belong to the same group, the printing on all the targets to be printed is performed only on the first side first, and then the printing on the second side is performed in the reverse order from the printing on the first side. For example, in the case where two printing jobs to arrange first to sixth pages on front and back alternately are sorted in the same group, the sixth page, the fourth page, and the second page witch belong to the second printing job are printed on the first side of the sheet. Then, the sixth page, the fourth page, and the second page which belong to the first printing job are continuously printed on the front side. Then, the cutting and inversion of the sheet is performed, and then the first page, the third page, and the fifth page witch belong to the first printing job are printed and, subsequently, the first page, the third page, and the fifth page which belong to the second printing job are printed on the second side.

If it is determined to be the simplex printing in S304, the procedure goes to S306, where the printing of only as many pages as the available trays can accommodate is performed on the basis of the determination in S303. If the face-down discharge is performed at this time, the printing is performed from the front page in the ascending order. The purpose of performing the printing as many pages as the available trays can accommodate irrespective of decision of the group in the case of the simplex printing is to avoid the influence of the change of the program on the subsequent printing because the sheet winding unit 113 is not used as in the duplex printing.

In S307, whether the printing process of the printing job whose group is already decided in the process in Fig. 4 is ended is determined, and if there are any printing processes which are not ended, the procedure goes to S308, where whether a new printing job is added is determined. If there is a new printing job added, the processes are repeated from S302 and, if not, the processes are repeated from S303. If the determination is affirmative in S307, a series of processes is ended and input of a new printing job is waited.

With the processes as described above, the number of trays required for the printing process and the minimum number of trays for the commencement of printing on the basis of the number of available trays are specified respectively. Then, the number of pages to be arranged on the same side of the same sheet in the same job group is decided according to the respective numbers of trays specified above. Accordingly, stop of the printing process by reason of being incapable of discharging the sheet to the tray after having started the printing is prevented. In particular, in the case of the duplex printing, necessity of stopping the printing process after having performed the continuous printing on the first side in a state in which the sheet is wound on the sheet winding unit 113 is eliminated, so that disadvantages such that this sheet is obliged to be discarded, or the subsequent duplex printing is disabled are prevented. As the sheets are sorted suitably into the respective trays, collecting operation by the user is facilitated. Since the number of available trays is confirmed plural times, printing process and the discharge of the sheet are achieved on the basis of the latest state.

In the case of the simplex printing, the printing is performed if there is any available tray. However, it is also possible to configure to start the printing when a predetermined number of trays become available in order to achieve higher efficiency than repeating the printing and stopping every time when one tray becomes available. The number of available trays which authorizes the starting of the printing may be varied in proportional to the number of trays required for the printing.

In the example shown above, the minimum number of trays for the commencement of printing is set to the number of currently available trays, or somewhat more or less than the number of available trays. However, it may be decided on other conditions. In other words, the number of pages which can be sorted to the same group (upper limit) may be decided on the basis of the number of trays in the sorting unit 114. Alternatively, if the number of trays in the sorting unit 114 is variable, the number of trays is specified, and the number of pages which can be sorted to the same group (upper limit) is decided according to the number of trays.

The tray to be used is reserved every time when it is added so as not to be used by other printing jobs. Accordingly, reduction of the number of available trays from the number confirmed previously when starting the printing is avoided. Since the printing is started after having confirmed that a required number of trays are available, the printing which is started once is not wasted, and the possibility of clogging of the printing process from then onward can be reduced.

In the case of the duplex printing, since the sequence of the sheets becomes discrete when the pages belonging to a single job is divided into a plurality of groups, the respective sheets are discharged to separate trays respectively. In order to prevent the sheets from becoming discrete, the pages included in one printing job may be prevented from being sorted to the different groups in the case of the duplex printing.

When the sheets are obliged to be discharged into a plurality of trays because the number of sheets to be discharged in a single printing job exceeds the allowable number of pages of a single tray, a group of trays adjacent to each other may be decided as the discharge destination. In this configuration, the operation to take out the sheets by the user is facilitated.

Since the printing process is obliged to stop also when the remaining amount of sheets is insufficient, the number of pages to be sorted into one group is set to a range which does not exceed the remaining amount of sheets.

Processes such as scheduling of the printing sequence or decision whether the pages are combined or not other than the printing process in the description given above may be implemented by the external apparatus such as the host apparatus or an external controller to cause the image forming apparatus to perform the printing on the basis of such scheduling or decision. In this case, the external apparatus acquires the status (the sheet which is set in the apparatus or the state of vacancy of the trays) from the image forming apparatus, and decides the printing sequence and the groups. In this case, the external apparatus functions as the print control apparatus.

According to the embodiment as describe above, the number of pages to be arranged on the first side of the continuous sheet is decided by specifying the number of available discharge destinations and the required discharge destinations when printing on both sides of the continuous sheet. Therefore, clogging of the printing process by reason of being incapable of discharging the sheet to the discharge destination is prevented.

The invention is also achieved by performing a process of supplying software (program) which implement the functions in the embodiment described above to the system or the apparatus via a network or various types of storage media and causes a computer (or CPU or MPU) of the system or the apparatus to read and execute the program. The program may be implemented by one computer or by a plurality of computers which are operated in conjunction with each other. The process described above does not have to be implemented entirely by the software, and part or the entire part of the process may be implemented by hardware.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A print control apparatus (200) capable of causing printing means (101-115) to execute printing on both sides of a continuous sheet according to one or more print jobs having one or more pages, comprising:
first specifying means (201) configured to specify the number of available discharge destinations from a plurality of discharge destinations where a printed sheet printed by the printing means can be discharged;
second specifying means (201) configured to specify the number of discharge destinations required for discharging the printed sheet printed by the printing means at least according to the number of print jobs;
decision means (201) configured to decide, for a page among the pages of the print jobs which is to be arranged on a first side of the continuous sheet, whether to include the page in a group of pages, according to the number specified by the first specifying means and the number specified by the second specifying means (S302); and
print control means (208) configured to control the printing means to print images corresponding to pages to be arranged on the first side of the continuous sheet continuously according to the group of pages decided by the decision means, and then to continuously print images corresponding to pages to be arranged on the opposite side of the continuous sheet (S305).

2. The print control apparatus according to Claim 1, wherein, when performing printing on the both sides of the continuous sheet continuously according to a plurality of print jobs, the print control means controls the printing means to perform the printing on the first side for the group of pages among the pages of the plurality of print jobs continuously, and then perform the printing on the second side continuously.

3. The print control apparatus according to Claim 1 or 2, wherein
the second specifying means increments the number of required discharge destinations by one when the decision means decides to include a page which needs to be discharged to another discharge destination than a previous page, in the group of pages (S407), and
the decision means decides whether or not to include a page in the group of pages, so that the number of required discharge destinations specified by the second specifying means does not exceed the number of available discharge destinations specified by the first specifying means (S405).

4. The print control apparatus according to Claim 3, further comprising a determination means (201), configured to determine that a page needs to be discharged to another discharge destination than a previous page at least when the page belongs to a different print job than the previous or when the discharge destination has reached its capacity with the previous page (S404).

5. The print control apparatus according to any one of Claim 1 to 4, wherein the print control means causes the printing means to perform the printing within a range which does not exceed the number of the discharge destinations specified by the first specifying means when causing the printing means to perform the printing only on one side of the continuous sheet (S306).

6. The print control apparatus according to any one of Claim 1 to 5, comprising a determination means (201) configured to determine whether the continuous sheet that can be used is the same or not on the page to page basis (S402),
wherein the print control means controls the printing means to continuously print the pages determined to be printable on the same sheet by the determination means.

7. The print control apparatus according to any one of Claim 1 to 6, wherein the decision means decides whether or not to include the page in the group of pages, so that a page to be printed in simplex mode is included in the group of pages, irrespectively of the number of available discharge destinations and the number of required discharge destinations (S406).

8. A print controlling method of causing printing means (101-115) to execute printing on both sides of a continuous sheet according to one or more print jobs having one or more pages, comprising:
specifying the number of available discharge destinations from a plurality of discharge destinations for discharging a sheet printed by the printing means;
specifying the number of discharge destinations required for discharging the sheet printed by the printing means at least according to the number of print jobs;
deciding, for a page among the pages of the print jobs which is to be arranged on a first side of the continuous sheet, whether to include the page in a group of pages, according to the number of specified available discharge destinations and the number of required discharge destinations (S302); and
causing the printing means to continuously perform printing of images corresponding to the pages to be arranged on the first side of the continuous sheet according to the decided group of pages, and then to continuously perform printing of images corresponding to the pages to be arranged on the opposite side of the continuous sheet (S305).

9. A program with computer-executable instructions for causing, when loaded on a computer, the computer to perform the method according to claim 8.

## Patentansprüche

1. Drucksteuervorrichtung (200), die in der Lage ist, eine Druckeinrichtung (101 - 115) zu veranlassen, auf beiden Seiten eines durchgehenden Bogens gemäß einem oder mehreren Druckaufträgen mit einer oder mehreren Seiten Drucken auszuführen, umfassend:
eine erste Spezifizierungseinrichtung (201), die konfiguriert ist, die Anzahl verfügbarer Ausgabeziele aus mehreren Ausgabezielen zu spezifizieren, an die ein durch die Druckeinrichtung bedruckter Druckbogen ausgegeben werden kann;
eine zweite Spezifizierungseinrichtung (201), die konfiguriert ist, die Anzahl Ausgabeziele, die zum Ausgeben des durch die Druckeinrichtung bedruckten Bogens erforderlich sind, mindestens gemäß der Anzahl der Druckaufträge zu spezifizieren;
eine Festlegungseinrichtung (201), die konfiguriert ist, für eine Seite der Seiten des Druckauftrags, die auf einer ersten Seite des durchgehenden Bogens angeordnet werden soll, gemäß der durch die erste Spezifizierungseinrichtung spezifizierten Anzahl und der durch die zweite Spezifizierungseinrichtung spezifizierten Anzahl festzulegen, ob die Seite in einer Gruppe von Seiten eingeschlossen werden soll (S302); und
eine Drucksteuereinrichtung (208), die konfiguriert ist, die Druckeinrichtung zu steuern, gemäß der durch die Festlegungseinrichtung festgelegten Gruppe von Seiten durchgehend Bilder zu drucken, die auf der ersten Seite des durchgehenden Bogens anzuordnenden Seiten entsprechen, und dann durchgehend Bilder zu drucken, die auf der entgegengesetzten Seite des durchgehenden Bogens anzuordnenden Seiten entsprechen (S305).

2. Drucksteuervorrichtung nach Anspruch 1, wobei beim Durchführen von durchgehendem Drucken auf den beiden Seiten des durchgehenden Bogens gemäß mehreren Druckaufträgen die Drucksteuereinrichtung die Druckeinrichtung steuert, Drucken für die Gruppe von Seiten aus den Seiten der mehreren Druckaufträge durchgehend auf der ersten Seite durchzuführen, und dann Drucken durchgehend auf der zweiten Seite durchzuführen.

3. Drucksteuervorrichtung nach Anspruch 1 oder 2, wobei
die zweite Spezifizierungseinrichtung die Anzahl erforderlicher Ausgabeziele um eins erhöht, wenn die Festlegungseinrichtung festlegt, dass eine Seite in der Gruppe von Seiten eingeschlossen werden soll, die an ein anderes Ausgabeziel als eine vorhergehende Seite ausgegeben werden muss (S4O7), und
die Festlegungseinrichtung festlegt, ob eine Seite in der Gruppe von Seiten eingeschlossen werden soll oder nicht, sodass die durch die zweite Spezifizierungseinrichtung spezifizierte Anzahl an erforderlichen Ausgabezielen die durch die erste Spezifizierungseinrichtung spezifizierte Anzahl an verfügbaren Ausgabezielen nicht übersteigt (S405).

4. Drucksteuervorrichtung nach Anspruch 3, ferner umfassend eine Bestimmungseinrichtung (201), die konfiguriert ist, zu bestimmen, dass eine Seite an ein anderes Ausgabeziel als die vorhergehende Seite ausgegeben werden muss, zumindest, wenn die Seite zu einem anderen Druckauftrag gehört als die vorhergehende oder wenn das Ausgabeziel mit der vorhergehenden Seite seine Kapazität erreicht hat (S404).

5. Drucksteuervorrichtung nach einem der Ansprüche 1 bis 4, wobei die Drucksteuervorrichtung die Druckeinrichtung veranlasst, Drucken innerhalb eines Bereichs durchzuführen, der die Anzahl der durch die erste Spezifizierungseinrichtung spezifizierten Ausgabeziele nicht übersteigt, wenn sie die Druckeinrichtung veranlasst, Drucken nur auf einer Seite des durchgehenden Bogens durchzuführen (S306).

6. Drucksteuervorrichtung nach einem der Ansprüche 1 bis 5, umfassend eine Bestimmungseinrichtung (201), die konfiguriert ist, seitenweise zu bestimmen, ob der benutzbare durchgehende Bogen der gleiche ist oder nicht (S402),
wobei die Drucksteuereinrichtung die Druckeinrichtung steuert, die Seiten durchgehend zu drucken, für die durch die Bestimmungseinrichtung bestimmt wurde, dass sie auf dem gleichen Bogen gedruckt werden können.

7. Drucksteuervorrichtung nach einem der Ansprüche 1 bis 6, wobei die Festlegungseinrichtung festlegt, ob die Seite in der Gruppe von Seiten eingeschlossen werden soll oder nicht, sodass eine im Simplexmodus zu druckende Seite in der Gruppe von Seiten eingeschlossen ist, unabhängig von der Anzahl verfügbarer Ausgabeziele und der Anzahl erforderlicher Ausgabeziele (S406).

8. Drucksteuerverfahren des Veranlassens einer Druckeinrichtung (101 - 115), auf beiden Seiten eines durchgehenden Bogens gemäß einem oder mehreren Druckaufträgen mit einer oder mehreren Seiten Drucken auszuführen, umfassend:
Spezifizieren der Anzahl verfügbarer Ausgabeziele aus mehreren Ausgabezielen zum Ausgeben eines durch die Druckeinrichtung bedruckten Bogens;
Spezifizieren der Anzahl Ausgabeziele, die zum Ausgeben des durch die Druckeinrichtung bedruckten Bogens erforderlich sind, mindestens gemäß der Anzahl der Druckaufträge;
Festlegen, für eine Seite der Seiten des Druckauftrags, die auf einer ersten Seite des durchgehenden Bogens angeordnet werden soll, ob die Seite in einer Gruppe von Seiten eingeschlossen werden soll, gemäß der Anzahl spezifizierter verfügbarer Ausgabeziele und der Anzahl erforderlicher Ausgabeziele; und
Veranlassen der Druckeinrichtung, gemäß der festgelegten Gruppe von Seiten durchgehendes Drucken von Bildern durchzuführen, die den auf der ersten Seite des durchgehenden Bogens anzuordnenden Seiten entsprechen, und dann durchgehendes Drucken von Bildern durchzuführen, die den auf der entgegengesetzten Seite des durchgehenden Bogens anzuordnenden Seiten entsprechen (S305).

9. Programm mit durch einen Computer ausführbaren Anweisungen zum Veranlassen eines Computers, das Verfahren nach Anspruch 8 durchzuführen, wenn es in den Computer geladen wird.

## Revendications

1. Appareil de commande d'impression (200) apte à amener un moyen d'impression (101-115) à exécuter une impression sur les deux faces d'une feuille continue en fonction d'une ou de plusieurs tâches d'impression comportant une ou plusieurs pages, comprenant :
un premier moyen de spécification (201) configuré pour spécifier le nombre de destinations de décharge disponibles à partir d'une pluralité de destinations de décharge auxquelles une feuille imprimée, imprimée par le moyen d'impression, peut être déchargée ;
un deuxième moyen de spécification (201) configuré pour spécifier le nombre de destinations de décharge requises pour décharger la feuille imprimée, imprimée par le moyen d'impression, au moins en fonction du nombre de tâches d'impression ;
un moyen de décision (201) configuré pour décider, pour une page parmi les pages des tâches d'impression qui doit être agencée sur une première face de la feuille continue, d'inclure ou pas la page dans un groupe de pages, en fonction du nombre spécifié par le premier moyen de spécification et du nombre spécifié par le deuxième moyen de spécification (S302) ; et
un moyen de commande d'impression (208) configuré pour commander le moyen d'impression afin d'imprimer des images correspondant à des pages devant être agencées sur la première face de la feuille continue en continu en fonction du groupe de pages décidé par le moyen de décision, puis imprimer en continu des images correspondant à des pages devant être agencées sur la face opposée de la feuille continue (S305).

2. Appareil de commande d'impression selon la revendication 1, dans lequel, lors de la réalisation de l'impression sur les deux faces de la feuille continue en continu en fonction d'une pluralité de tâches d'impression, le moyen de commande d'impression commande le moyen d'impression pour qu'il réalise l'impression sur la première face pour le groupe de pages parmi les pages de la pluralité de tâches d'impression en continu, puis réaliser l'impression sur la seconde face, en continu.

3. Appareil de commande d'impression selon la revendication 1 ou 2, dans lequel
le deuxième moyen de spécification fait progresser de un le nombre de destinations de décharge requises lorsque le moyen de décision décide d'inclure une page qui doit être déchargée jusqu'à une destination de décharge autre que celle d'une page précédente, dans le groupe de pages (S407), et
le moyen de décision décide d'inclure ou pas une page dans le groupe de pages, de manière que le nombre de destinations de décharge requises spécifié par le deuxième moyen de spécification n'excède pas le nombre de destinations de décharge disponibles spécifié par le premier moyen de spécification (S405).

4. Appareil de commande d'impression selon la revendication 3, comprenant, en outre, un moyen de détermination (201), configuré pour déterminer qu'une page doit être déchargée jusqu'à une destination de décharge autre que celle d'une page précédente au moins lorsque la page appartient à une tâche d'impression différente de celle de la page précédente ou lorsque la destination de décharge a atteint sa capacité avec la page précédente (S404).

5. Appareil de commande d'impression selon l'une quelconque des revendications 1 à 4, dans lequel le moyen de commande d'impression amène le moyen d'impression à réaliser l'impression dans une plage qui n'excède pas le nombre de destinations de décharge spécifié par le premier moyen de spécification lorsque le moyen d'impression est amené à réaliser l'impression sur une seule face de la feuille continue (S306).

6. Appareil de commande d'impression selon l'une quelconque des revendications 1 à 5, comprenant un moyen de détermination (201) configuré pour déterminer si la feuille continue qui peut être employée est la même ou pas sur une base page à page (S402),
le moyen de commande d'impression commandant le moyen d'impression pour qu'il imprime en continu les pages déterminées comme pouvant être imprimées sur la même feuille par le moyen de détermination.

7. Appareil de commande d'impression selon l'une quelconque des revendications 1 à 6, dans lequel le moyen de décision décide d'inclure ou pas la page dans le groupe de pages, de manière qu'une page à imprimer en recto seulement soit incluse dans le groupe de pages, quel que soit le nombre de destinations de décharge disponibles et le nombre de destinations de décharge requises (S406).

8. Procédé de commande d'impression pour amener un moyen d'impression (101-115) à exécuter une impression sur les deux faces d'une feuille continue en fonction d'une ou de plusieurs tâches d'impression comportant une ou plusieurs pages, comprenant les étapes consistant à :
spécifier le nombre de destinations de décharge disponibles à partir d'une pluralité de destinations de décharge pour décharger une feuille imprimée par le moyen d'impression ;
spécifier le nombre de destinations de décharge requises pour décharger la feuille imprimée par le moyen d'impression au moins en fonction du nombre de tâches d'impression ;
décider, pour une page parmi les pages des tâches d'impression qui doit être agencée sur une première face de la feuille continue, d'inclure ou pas la page dans un groupe de pages, en fonction du nombre de destinations de décharge disponibles spécifié et du nombre de destinations de décharge requises (S302) ; et
amener le moyen d'impression à réaliser en continu une impression d'images correspondant aux pages devant être agencées sur la première face de la feuille continue en fonction du groupe de pages décidé, puis réaliser en continu une impression d'images correspondant aux pages devant être agencées sur la face opposée de la feuille continue (S305).

9. Programme avec des instructions exécutables sur ordinateur pour amener, lorsqu'il est chargé sur un ordinateur, l'ordinateur à mettre en oeuvre le procédé selon la revendication 8.
